# EUROPEAN PATENT SPECIFICATION

(11) **EP 4 446 217 B1**
(45) Date of publication and mention of the grant of the patent: **21.01.2026**
(21) Application number: 23167378.1
(22) Date of filing: 11.04.2023
(51) Int. Cl.: B64C 7/00, B64C 9/16

(54) **FAIRING ARRANGEMENT FOR A HIGH-LIFT MECHANISM OF AN AIRCRAFT**
VERKLEIDUNG FÜR EINEN HOCHAUFTRIEBSMECHANISMUS EINES FLUGZEUGS
CARÉNAGE POUR UN MÉCANISME HYPERSUSTENTATEUR D'UN AÉRONEF

(43) Date of publication of application: 16.10.2024
(73) Proprietor: Airbus Operations GmbH, 21129 Hamburg (DE)
(72) Inventor: Andreani, Luc, 21129 Hamburg (DE); Lorenz, Florian, 21129 Hamburg (DE)

(56) References cited:
- US-A- 4 854 528
- US-A1- 2020 407 041

## Description

The invention relates to a fairing arrangement for a high-lift mechanism of an aircraft, wherein the high-lift mechanism includes a flap to be arranged at a trailing edge of an aircraft wing and a mounting and guiding mechanism for the flap. Further the invention relates to a high-lift system, an aircraft wing and an aircraft comprising such fairing arrangement.

With regard to prior art, reference is made to the following citations:
[1]US 2022 306 274 A1
[2]US 2021 316 840 A1
[3]US 2016 068 255 A1
[4]EP 2 516 257 B1

Airbus press release of September 22, 2021, https://www.airbus.com/en/newsroom/press-releases/2021-09-airbus-launches-extra-high-performance-wing-demonstrator-to-fortify
Airbus press release of April 12, 2022, https://www.airbus.com/en/newsroom/press-releases/2022-04-nature-inspired-wing-demonstrator-completes-wind-tunnel-tests
US 2020/0407041 A1
US 4 854 528 A

[1] to [4] disclose a fairing arrangement for a high-lift mechanism of an aircraft, wherein the high-lift mechanism includes a flap to be arranged at a trailing edge of an aircraft wing and a mounting and guiding mechanism for the flap, the fairing arrangement comprising a flap side fairing unit and a wing side fairing unit, the flap side fairing unit comprising a flap side fairing for covering an aft part of the mounting and guiding mechanism and a flap side fairing mount for movably mounting the flap side fairing to the flap, the wing side fairing unit comprising a wing side fairing for covering a forward part of the mounting and guiding mechanism and a wing side fairing mount for mounting the wing side fairing in a rigidly fixed manner to the wing.

[7] and [8] present fairing arrangements for a high-lift mechanism of aircrafts.

An object of the invention is to functionally improve such fairing arrangements. For achieving such object, the invention provides a fairing arrangement according to claim 1. Advantageous uses of the fairing arrangement are given in the further independent claims.

Advantageous embodiments are subject-matters of the dependent claims.

The invention provides a fairing arrangement for a high-lift mechanism of an aircraft, wherein the high-lift mechanism includes a flap to be arranged at a trailing edge of an aircraft wing and a mounting and guiding mechanism for the flap. The fairing arrangement comprises a flap side fairing unit and a wing side fairing unit. The flap side fairing unit comprises a flap side fairing for covering an aft part of the mounting and guiding mechanism and a flap side fairing mount for rigidly mounting the flap side fairing to the flap. The wing side fairing unit comprises a wing side fairing for covering a forward part of the mounting and guiding mechanism and a wing side fairing mount for mounting the wing side fairing to the wing. The wing side fairing mount is configured for connecting the wing side fairing movably to the wing. For example, the wing side fairing mount is configured such that the wing side fairing mounted therewith or at least a part thereof is movable in a lateral direction. Preferably, the wing side fairing mount is configured for connecting the wing side fairing movably to the wing such that the wing side fairing is rotatable around an axis directed at least partially in a vertical direction. The wing side fairing and the flap side fairing are connected by a fairing joint allowing relative movements of the fairings during movement of the flap such that the movement of the wing side fairing relative to the wing is controlled by the movement of the flap side fairing. The fairing joint and the wing side fairing mount are configured in a way that a lateral movement of the flap side fairing guides the lateral or rotational position of the wing side fairing.

Preferably, the fairing joint is configured such that the rotational movement of the wing side fairing around the axis is controlled or driven by the movement of the flap side fairing. In use, the flap side fairing is rigidly mounted to the flap for movement therewith. The movement of the flap side fairing is transferred via the fairing joint to the wing side fairing. The fairing joint has enough degrees of freedom to allow relative movements of the wing side fairing and the flap side fairing during movements of the flap.

According, the movable wing side fairing is mechanically coupled to the flap side fairing with the fairing joint. Preferably, the movable wing side fairing is mechanically coupled to the flap side fairing with a 5 degree of freedom joint.

Preferably, the fairing joint is configured such that it allows relative movements of the fairings in at least one or several or all of the following degrees of freedom:
- in line of flight
- in a vertical direction
- around a vertical axis
- around a first horizontal axis essentially directed in spanwise or lateral direction
- a second horizontal axis essentially directed in line of flight.

Preferably, the fairing joint is configured such that it effects a common sideward movement of a rearward end portion of the wing side fairing and of a forward end portion of the flap side fairing.

Preferably, the fairing joint has five degrees of freedom.

Preferably, the fairing joint comprises a spherical bearing and a sliding bearing.

Preferably, the spherical bearing is mounted on one of the fairings and the sliding bearing is arranged between the spherical bearing and the other one of the fairings.

Preferably, the sliding bearing comprises a sliding pad for sliding in a plane. Alternatively, the sliding bearing comprises a piston slidable in a sliding bush and provides a further, preferably rotational, degree of freedom.

For example, the piston and/or the bush are mounted to the associated fairing in a manner rotatable about an axis essentially perpendicular to the sliding direction such as a horizontal axis essentially directed in the spanwise or lateral direction.

Preferably, the wing side fairing unit is configured such that a rear part of the wing side fairing to be engaged with the flap side fairing is movable in a limited predefined manner in a spanwise direction.

Preferably, the wing side fairing mount comprises a forward connecting mechanism configured to connect a forward part of the wing side fairing rotatably with at least one or with two degrees of freedom to the mounting and guiding mechanism.

Preferably, the forward connecting mechanism includes a spherical bearing. Preferably, the forward connecting mechanism allows movement of a forward part of the wing side fairing in at least two degrees of freedom, especially by a rotation about a first axis that has at least a direction component in the vertical direction (e.g., the vertical direction is the lift direction of the wing) and by a rotation about a second axis extending or essentially extending in the flight direction.

Preferably, the wing side fairing mount comprises a rearward connecting mechanism configured to connect a rearward part of the wing side fairing such that it is movable in a spanwise direction.

Preferably, the rearward connecting mechanism includes a swing strut. Preferably, the rearward connecting mechanism includes a pair of parallel swing struts. Preferably, the rearward connecting mechanism includes a tensile means, i.e., flexible means such as a cable or a chain. Preferably, the rearward connecting mechanism includes an arrangement of a track and rollers or sliders. Preferably, the rearward connecting mechanism includes an upper track and roller or slider arrangement and/or a lower track and roller or slider arrangement. Preferably, the rearward connecting mechanism includes a track curved around a rotation axis of the forward connecting mechanism in combination with a set of rollers or sliders running on the track. Preferably, the rearward connecting mechanism includes a linear bearing.

Preferably, a forward end portion of the flap side fairing engages into a rearward end portion of the wing side fairing in order to allow a telescopic and rotational relative movement of said fairings.

Preferably, the fairing arrangement further comprises a fixed front fairing unit configured to be rigidly fixed to the wing, wherein the wing side fairing unit is configured as intermediate movable wing side fairing unit arranged between fixed front fairing unit and the flap side fairing unit.

According to another aspect, the invention provides a high-lift system for an aircraft, comprising
a high-lift mechanism including a flap to be arranged at a trailing edge of an aircraft wing and a mounting and guiding mechanism for the flap (also called flap support in the prior art), and
a fairing arrangement according to any of the aforementioned embodiments.

According to another aspect, the invention provides an aircraft wing comprising such a high-lift system and/or a fairing arrangement according to any of the aforementioned embodiments.

According to another aspect, the invention provides an aircraft, comprising a wing arrangement including such a wing and/or such a high-lift system and/or a fairing arrangement according to any of the aforementioned embodiments.

The invention lies on the technical field of aircraft high-lift systems and especially relates to fairings of such high-lift systems.

Preferred embodiments of the invention propose improved fairing kinematics for a variable shape trailing edge.

Preferred embodiments of the invention relate to a type of fairing arrangement that is kinematically configured to translate and rotate.

In known fairing solutions such as mentioned above, a forward part of the fairing is rigidly assembled to the wing and the aft part of the fairing has a hinged connection to a flap support beam.

Preferred embodiments provide at least one, several or all of the following advantages:
- an interface of a rear part of the fairing and flap is much simpler
- a lateral movement of the flap system can be compensated
- a solution proposed by preferred embodiments may be a key enabler for a variable shape trailing edge functionality (VSTE) as demonstrated on eXtra performance Wing demonstrator, see [5] and [6]
- ensures a good aerodynamic condition between forward and aft part of the fairing
- The positional determination of the forward fairing is steered by the engagement of the forward fairing into the forward fairing
- Also more or fully sealed conditions in all high lift configurations can be realized

The fairing kinematic principle according to preferred embodiments of the invention provide at least one, several or all of the following benefits:
- Minimizing the aerodynamic drag in high-speed and low-speed operation
- Minimizing the noise in take-off and landing configuration
- No side load stay and reinforcement frames are necessary, or at least they are smaller and
- lighter compared to previous solutions
- Only few parts are necessary for the kinematics, this reduces the complexity in failure cases,
- and the structure weight
- With a rotational forward movable fairing with a coupling joint of 5 DoF the kinematics is
- isostatic, with exactly determined positions and load paths
- The elastomer sealing can be avoided or compression significantly reduced
- Fairing vibration and fatigue issues can be reduced

Preferred embodiments of this invention are related to an aircraft wing, in the area of high-lift devices like flaps. Flaps are normally mounted on flap support structures, which are on most aircrafts covered by fairings. Preferred embodiments of the invention present a mechanism, which is used to deploy fairing-movable-parts with a simple and compact kinematics with a lot of benefits on aircraft level. Preferred embodiments relate to a high-lift trailing edge device, where each flap is supported by two or more tracks. For aerodynamic reasons the tracks are covered with a fairing arrangement. During deployment and retraction of the flaps, fairings of the fairing arrangement are driven by the motion of the flap. Other as in most commercial airliners, a wing side fairing of the fairing arrangement is not rigidly fixed to the wing, especially the wing box, but is mounted such that a rear end portion thereof can move laterally. Especially, the wing side fairing can conduct a rotational movement about a vertical axis.

Preferred embodiments of the invention relate to a fairing concept, which comprises a forward movable fairing (referred to as wing side fairing), and a rearward fairing attached to the flap (referred to as flap side fairing). Preferably, the forward-movable-fairing (FMF) is rotating around a vertical axis, which is mounted on the flap support structure, but this motion is not limited to rotations for the forward fairing.

In preferred embodiments, the rearward fairing (RF) is directly attached to the flap, so just follows the flap motion. The rotation or other movement of the forward movable fairing (FMF) will be controlled by the rearward fairing (RF) with a 5 degree of freedom joint (5 DoF). The principle only needs very few parts and also enables high-lift and high-speed operation (VC/DFS) without creating significant steps in the split area during operation.

According to preferred embodiments, the mechanism principle works such that a spherical bearing (3 DoF) is fixedly attached to the movable wing side fairing, and a sliding pad (with 2 DoF) is fixed to the rearward flap side fairing. Overall the degrees-of-freedom at the joint are in sum 5.

Another possibility is to invert the location of the spherical bearing to the rearward flap side fairing (3 DoF) and fix it to this location to the structure of the flap side fairing. In this case 2 further DoF are provided in the movable wing side fairing, which can be done by a sliding bearing designed as pads (2 DoF) or two translating joints (2 DoF), or one translating joint and adjacent rotational link (2 DoF), or two adjacent rotional links (2 DoF).

A huge benefit of preferred emodiments of the invention is that the rearward fairing (RF - flap side fairing) controls the lateral motion of the forward fairing (wing side fairing) in high-lift and high-speed operation (VC/DFS) by minimizing the steps out of wind in the split line.

Furthermore, the concept of preferred embodiments enables a very good sealing high-speed and low speed, even if a lot of fowler-motion is implemented in the flap kinematics. The forward-movable-fairing loads are also transferred via the 5 DoF-joint to the rearward fairing.

Between the flap and the flap side fairing no elastomer sealing is required, because the two parts are attached to each other; this stiffens the structure and reduces the overall weight of the fairing. In use, the flap side fairing of the fairing arrangement is attached to the flap which simplifies the fairing kinematics considerably (no need of operating rod, structure frames, side load stay, and a lot of sealings). Also a very good sealing is provided in high-speed and low-speed in the split area, without huge steps.

According to preferred embodiments, a location of the 5 DoF joint under a flap-support-structure (FSS, referred to as mounting and guiding mechanism above) is also beneficial in terms of minimizing the relative motions, between the wing side and the flap side fairing. Especially for the system installation (SI) routing, which can be directly fixed to the joint elements and avoids an entrapment of the wires in the fairing split lines.

Embodiments of the invention are explained below referring to the accompanying drawings in which:
- Fig. 1: is a plan view of an aircraft;
- Fig. 2a: is a top plan view of a fairing arrangement of the aircraft in a clean configuration (flap retracted);
- Fig. 2b: is a view as in Fig. 2a of the fairing arrangement in a high-lift configuration (flap fully extended);
- Fig. 2c: is a view as in Fig. 2a and 2b of the fairing arrangement in a negative variable shape trailing edge configuration;
- Fig. 3a: is a side view of the fairing arrangement of the aircraft in the clean configuration (flap retracted);
- Fig. 3b: is a view as in Fig. 3a of the fairing arrangement in a high-lift configuration (flap fully extended);
- Fig. 3c: is a view as in Fig. 3a and 3b of the fairing arrangement in a negative variable shape trailing edge configuration;
- Fig. 4: is a side view of a high-lift system including a first embodiment of a fairing arrangement wherein fairings thereof are shown partly broken away for illustrative purposes;
- Fig. 5: a first perspective rear and side view of a wing side fairing unit of the fairing arrangement of the first embodiment;
- Fig. 6: a second perspective rear and side view of the wing side fairing unit of the fairing arrangement of the first embodiment;
- Fig. 7: a side view of the wing side fairing unit of the fairing arrangement according to a second embodiment, wherein a fairing shell is shown partly broken away for illustrative purposes;
- Fig. 8: a perspective view seen from above and a side of the wing side fairing unit of the fairing arrangement according to the second embodiment;
- Fig. 9: a perspective view seen from below and from a side of the wing side fairing unit of the fairing arrangement according to a third embodiment wherein a fairing shell is indicated in broken lines only;
- Fig. 10: a side view of the fairing arrangement according to a fourth embodiment;
- Fig. 11: a partly transparent perspective view of the fairing arrangement according to a fifth embodiment in an extended state;
- Fig. 12: a partly transparent perspective view of the fairing arrangement according to the fifth embodiment in a retracted state;
- Fig. 13: a perspective outer view of the fairing arrangement according to the fifth embodiment in the retracted state;
- Fig. 14: a perspective outer view of the fairing arrangement according to the fifth embodiment in the extended state;
- Fig. 15: a top view onto a fairing joint of the fairing arrangement according to a sixth embodiment;
- Fig. 16: a side view, partly broken away, onto a part of the fairing joint of the fairing arrangement according to the sixth embodiment;
- Fig. 17: a top view similar to Fig. 15, where further parts of the fairings are omitted for illustrative purposes;
- Fig. 18: a partly transparent perspective side view of the fairing arrangement according to a seventh embodiment with a different design of the fairing joint; and
- Fig. 19: a partly transparent bottom view of the fairing arrangement according to the seventh embodiment.

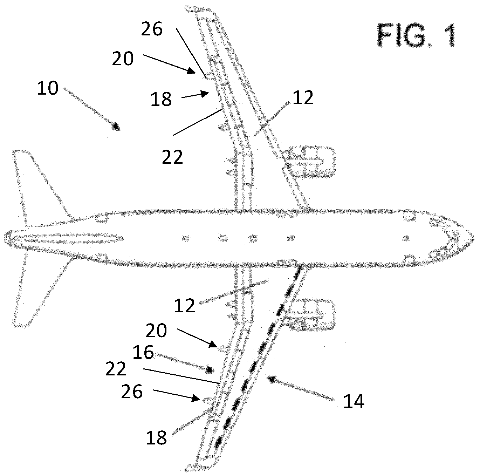

An aircraft 10 as shown in Fig. 1 has a pair of aircraft wings 12 extending from a fuselage. Each wing 12 has a leading edge 14 and a trailing edge 16. High-lift systems 18 are arranged at the trailing edge 16. Each high-lift system 18 comprises a high-lift mechanism 20 and fairing arrangements 26. The high-lift mechanism 20 includes a flap 22 and several mounting and guiding mechanisms 24 for mounting the flap 22 at the trailing edge 16 and guiding a movement of the flap 22. The mounting and guiding mechanism 24 serves as flap support. In some embodiments, the mounting and guiding mechanism 24 includes a flap track for guiding the movement of the flap. Any of the mounting and guiding mechanisms 24 is aerodynamically covered by a fairing arrangement 26.

According to some embodiments, the wing 12 has a variable shape trailing edge functionality (VSTE) where the trailing edge 16 has a variable shape and can be deformed for different flight situations.

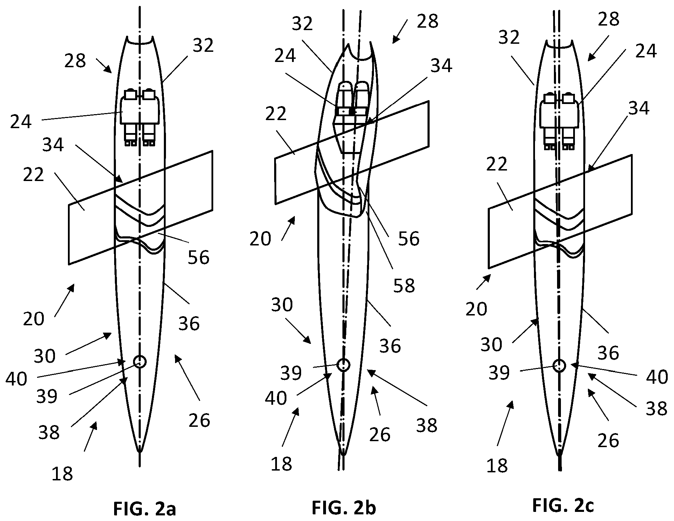

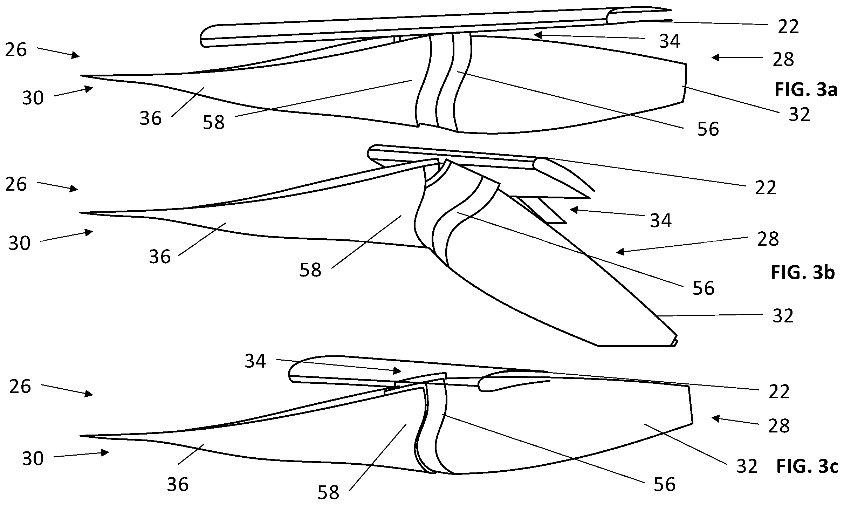

Fig. 2a, 2b, 2c, 3a, 3b, and 3c show an embodiment of the fairing arrangement 26 in different flap positions, wherein Figs. 2a and 3a show a clean configuration wherein the flap 22 is retracted, Figs. 2b and 3c show a high-lift configuration where the flap 22 is fully extended, and Figs. 2c and 3c show a negative VSTE configuration.

Referring to Figs. 2a-2c and 3a-3c, there is shown the fairing arrangement 26 for the high-lift mechanism 20 of the aircraft 10. The high-lift mechanism 20 includes the flap 22 to be arranged at a trailing edge 16 of the aircraft wing 12 and the mounting and guiding mechanism 24 for the flap 22.

The fairing arrangement 26 comprises a flap side fairing unit 28 and a wing side fairing unit 30. As seen in flight direction of the aircraft 10, the flap side fairing unit 28 is an aft fairing unit and the wing side fairing unit is a forward fairing unit.

The flap side fairing unit 28 comprises a flap side fairing 32 for covering an aft part of the mounting and guiding mechanism 24 and a flap side fairing mount 34 for mounting the flap side fairing 32 to the flap 22. In the embodiments shown, the flap side fairing mount 34 is configured to mount the flap side fairing 32 rigidly to the flap 22. For example, the shell of the flap side fairing 32 may be mounted with usual bolts, rivets or fasteners (not shown) to the flap 22.

The wing side fairing unit 30 comprises a wing side fairing 36 for covering a forward part of the mounting and guiding mechanism 24 and a wing side fairing mount 38 for mounting the wing side fairing 36 to the wing. The wing side fairing mount 38 is configured to movably connect the wing side fairing 36 to the wing 12 or the front part of the mounting and guiding mechanism 24 which is attached to the wing 12. In some embodiments (not shown), the wing side fairing mount 38 connects the wing side fairing 36 such that it is shiftable in a lateral direction.

In some embodiments as shown, the wing side fairing mount 38 is configured to connect the wing side fairing 36 to the wing 12 or the front part of the mounting and guiding mechanism 24 which is attached to the wing 12 such that it is rotatable around an essentially vertical axis 39 directed at least with its largest direction component in a vertical direction. Here, the vertical direction is the direction essentially perpendicular to the spanwise and chordwise directions of the wing 12 (i.e., the direction of lift).

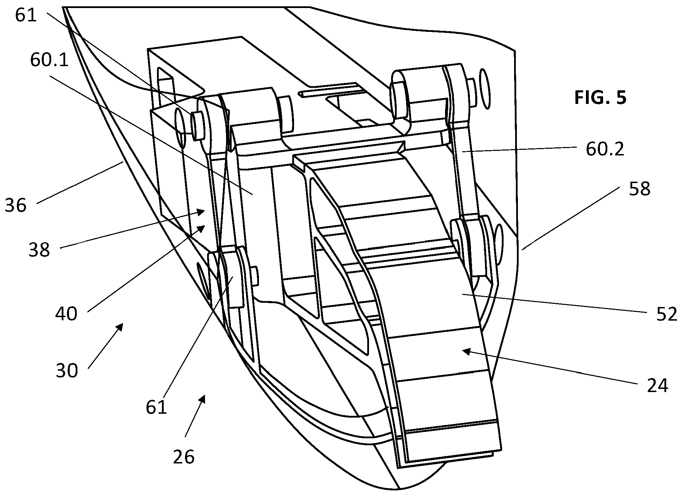

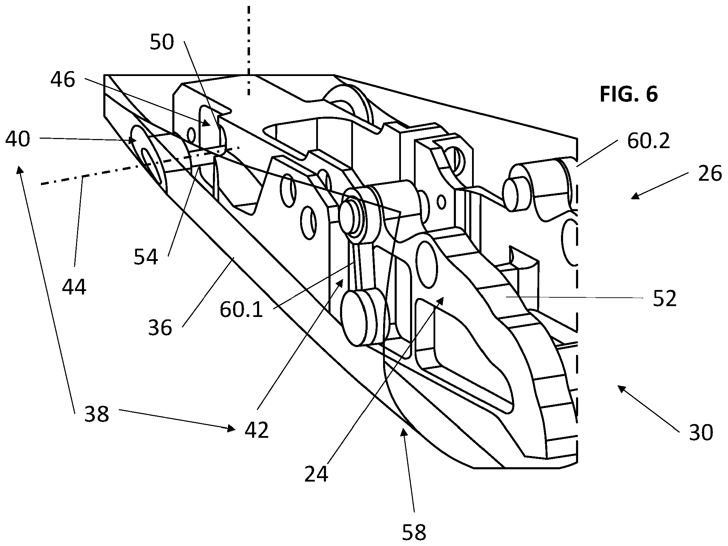

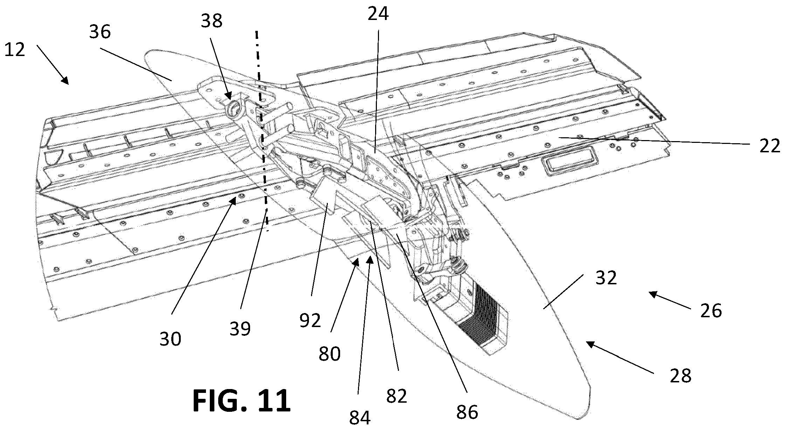

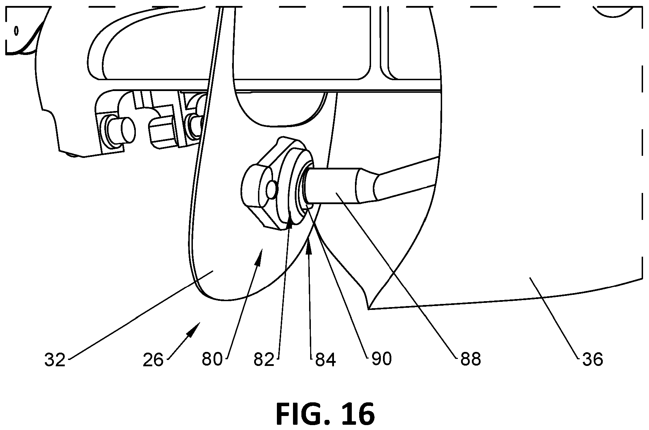

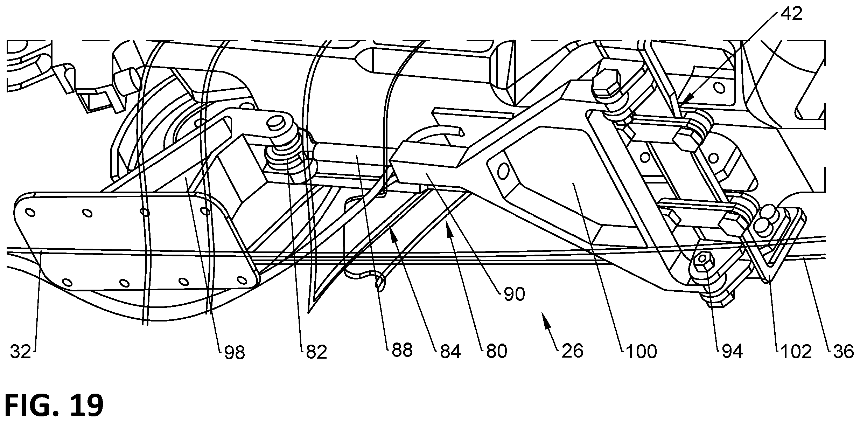

Although not shown in Figs. 1 to 10, the fairing arrangement 36 comprises a fairing joint 80 for mechanically coupling the flap side fairing 32 and the wing side fairing such that a movement of the flap side fairing controls or drives the movement of the wing side fairing 36. Especially, a movement of the flap side fairing 36 together with the moved flap 22 is transferred via the fairing joint to a lateral movement, more preferred the rotation about the essentially vertical axis 39, of the wing side fairing 36. Further details and embodiments of the fairing joint 80 are explained below referring to Figs. 11 to 19. The flap side fairing 32 is in all configurations in coupled via the fairing joint with the wing side fairing 36. The fairing joint 80 is is configured in a way that the lateral movement of the flap side fairing 32 guides the lateral or rotational position of the wing side fairing 36.

As further shown in Figs. 2a to 3c, a U-channel shaped forward end portion 56 of the flap side fairing 32 extends into a U-channel shaped rearward end portion 58 of the wing side fairing 36 in order to allow a telescopic and rotational relative movement of said fairings. In some embodiments, the extension and design of the end portions 56, 58 is such that they extend into each other in all flap configurations. The Figs. 3a to 3c show the high lift configurations in a side view.

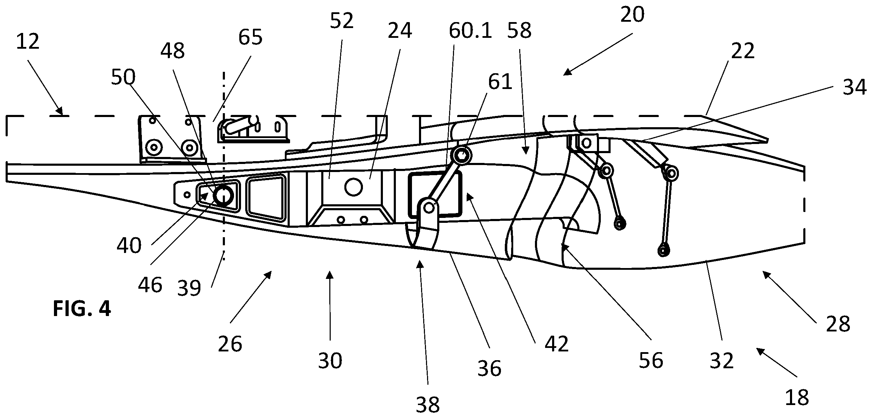

Figs. 4 to 19 show the fairing arrangement 26 according to a first to seventh embodiment. While Figs. 4 to 10 show embodiments with different designs of the wing side fairing mount 38, Figs. 11 to 19 show embodiments with different designs of the fairing joint 80.

In the following, preferred designs of the wing side fairing mount 38 are described referring to Figs. 4 to 10. As notable therefrom, the wing side fairing mount 38 comprises a forward connecting mechanism 40 and a rearward connecting mechanism 42.

The forward connecting mechanism 40 is configured to connect a forward part of the wing side fairing 36 rotatably with one degree of freedom or with two degrees of freedom to the mounting and guiding mechanism 24.

In an embodiment not shown, the forward connecting mechanism 40 just has a simple bearing allowing rotation of the wing side fairing around the essentially vertical axis 39.

In the embodiments shown in Figs. 4 to 10 the forward connecting mechanism is essentially comprised of a bearing allowing rotation about the essentially vertical axis 39 and further allowing rotation about a second axis 44 perpendicular to this essentially vertical axis 39. For example, the bearing is a first spherical bearing 46.

In some embodiments, the first spherical bearing 46 includes a ball portion 48, a shaft portion and a spherical bearing shell 50. A forward part of the fairing shell of the wing side fairing 36 is hold on ends of the shaft portion 48. The ball portion 48 is integrally formed with or rigidly connected to a centre of the shaft portion 48 and is hold in the spherical bearing shell 50. The spherical bearing shell is fixed to a track member 52 of the mounting and guiding mechanism 24 which itself is, in use, fixed to the structure of the wing 12.

The rearward connecting mechanism 42 is configured to allow a movement of the rearward part of the wing side fairing 36 in a spanwise direction during the rotational movement about the essentially vertical axis 39. Several possible designs of the rearward connecting mechanism 42 are provided in the first to fourth embodiment as shown in Figs. 4 to 10.

In a first embodiment as shown in Figs. 4 to 6, the rearward connecting mechanism 42 comprises a pair of parallel swing struts 60.1, 60.2. Hence, in the first embodiment, the wing side fairing 36 (i.e., a forward fairing of the fairing arrangement 26) is in the rotational axis connected to the wing structure 65 by the spherical bearing 46. In an aft area of the wing side fairing 36 the two parallel fairing struts 60.1, 60.2 are located to lock the rotational degree of freedom around an axis in line of flight and around an axis in spanwise direction. The resulting movement is not a pure rotation around the vertical axis 39 but more a complex combination of rotations. The required rotation of the wing side fairing 36 is limited to just a few degrees and the here described movement is working well as a design solution.

The swing struts 60.1, 60.2 are equipped with multi-axis bearings such as spherical bearings 61 at their ends in order to connect the strut ends movably to the track member 52 and the wing side fairing 36, respectively.

As a variation (not shown) the struts 60.1, 60.2 can be replaced by flexible tensile means or flexible elements like steel cables in combination with a roller or linear bearing below the track member 52.

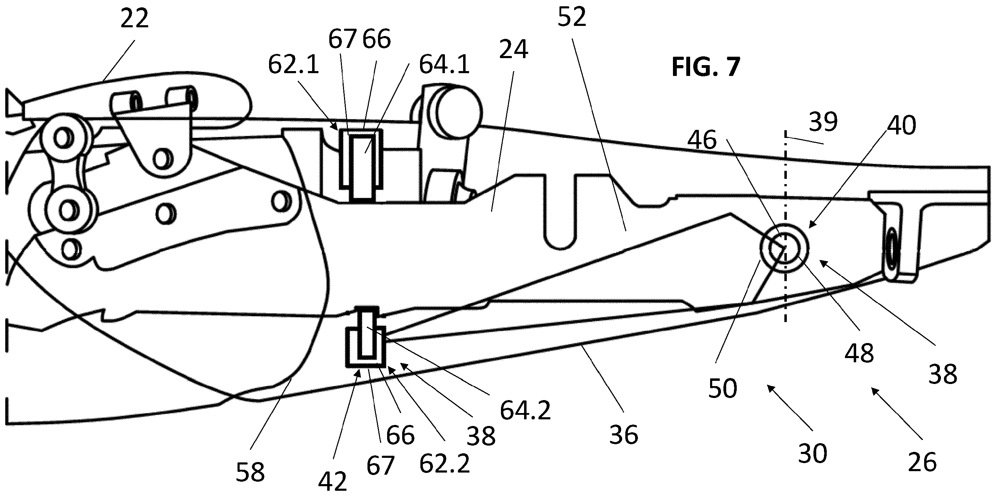

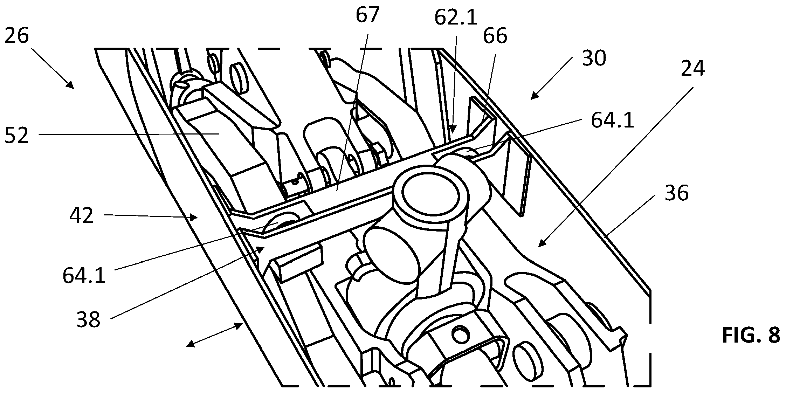

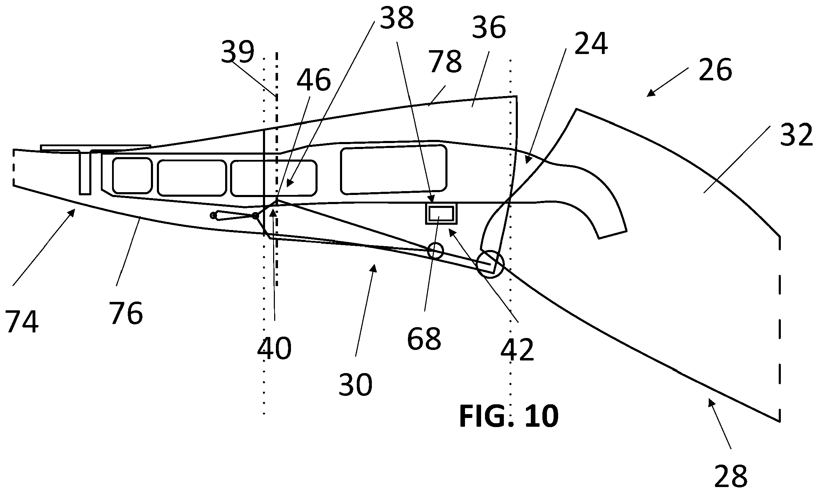

In a second embodiment as shown in Figs. 7 and 8, the rearward connecting mechanism 42 comprises an upper track and roller arrangement 62.1 and a lower track and roller arrangement 62.2. The track and roller arrangements 62.1, 62.2 comprise rollers 64.1, 64.2 rotatably mounted on a roller support 66, e.g., a fairing bridge 67, at an inside the wing side fairing 36 and allowing movement of the aft part of the wing side fairing 36 in the spanwise direction. In a variant not shown, sliders are used instead of some or all of the rollers 64.1, 64.2. In the second embodiment, the wing side fairing 36 is connected to the wing structure 65 with the spherical bearing 46 as explained above and a combination of two rollers 64.1 above the track member 52 and two rollers 64.2 below the track member 52. As a variation of this solution which is illustrated schematically in Fig. 10 for the fourth embodiment, also linear bearings 68 can be used instead of rollers 64.1, 64.2.

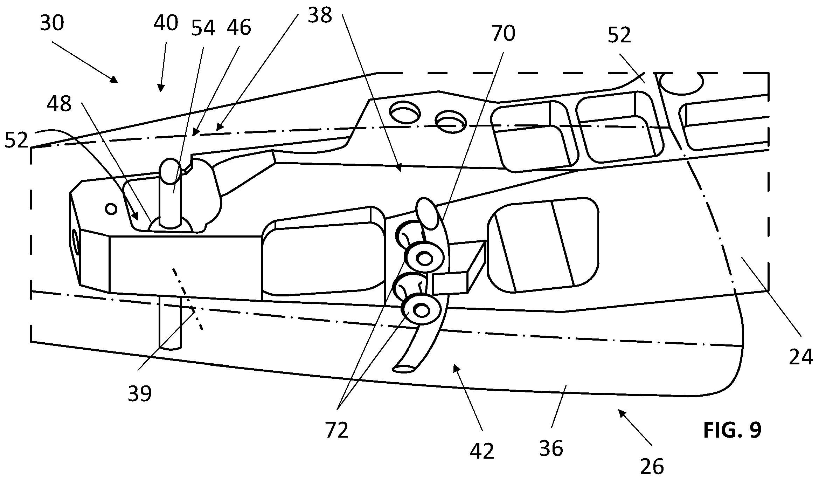

In a third embodiment as shown in Fig. 9, the rearward connecting mechanism 42 comprises a curved track 70 and rollers 72 running on that curved track 70. In the embodiment shown, the curved track 70 is fixed inside the wing side fairing 36 and the rollers 72 are rotatably mounted on a bottom surface of the mounting and guiding mechanism 24, especially the track member 52. In other embodiments (not shown), the rollers 72 are rotatably mounted in the wing side fairing 30 while the track 70 is mounted on the mounting and guiding mechanism 24. In the third embodiment. the aft guidance of the wing side fairing 36 is realized by a set of rollers 72 running on the curved track 70 with the track center point in line with the vertical rotation axis 39.

In the fourth embodiment as shown in Fig. 10, an alternative arrangement of the fairings 36, 32 is shown. Here, the fairing arrangement 26 comprises a fixed front fairing unit 74 configured to be rigidly fixed to the wing 12, wherein the wing side fairing unit 30 is configured as intermediate movable wing side fairing unit arranged between fixed front fairing unit 74 and the flap side fairing unit 28.

In other words, a forward fairing for covering a front part of the mounting and guiding mechanism 24 is splitted into a fixed fairing 76 and the wing side fairing 36, here configured as an intermediate fairing 78. The intermediate fairing 78 is mounted with the forward connecting mechanism 40 and the rearward connecting mechanism 42. In the fourth embodiment, the rearward connecting mechanism 42 includes the linear bearing 68 allowing movement of the aft part of the intermediate fairing 78 in spanwise direction for rotation of this intermediate bearing 78 about the essentially vertical axis 39, but of course the rearward connecting mechanism 42 could also have the design of any of the other embodiments as explained above.

In the following, preferred designs of the fairing joint 80 are explained referring to Figs. 11 to 19. As mentioned above, the fairing joint 80 is configured to connect the flap side fairing 32 and the wing side fairing 36 such that relative movements of the fairings 32, 36 during flap extension and retraction are possible and such that a rearward end portion 58 of the wing side fairing 36 moves laterally to follow a corresponding movement of the forward end portion 56 of the flap side fairing 32.

Depending on the kinematics of the flap movement, different movements of the wing side fairing 32 are possible. Depending on the kinematics, the fairing joint is configured such that it allows relative movements of the fairings 36, 32 in different degrees of freedom such as
- in line of flight
- in a vertical direction
- around a vertical axis
- around a first horizontal axis essentially directed in spanwise direction
- a second horizontal axis essentially directed in line of flight.

In the embodiments shown, where the wing side fairing movement is a rotational movement around the axis 39 with further possible movements as mentioned above, the fairing joint 80 is configured as a 5 degree of freedom joint e.g., providing all of the above mentioned degrees of freedom. Further, the fairing joint couples the fairings 32, 36 in order to effect a common sideward movement of the rearward end portion 58 of the wing side fairing 36 and of the forward end portion 56 of the flap side fairing 32.

In some embodiments, the fairing joint 80 comprises a spherical bearing and a sliding bearing 84. The spherical bearing of the fairing joint 80 is referred to as second spherical bearing 82 in order to distinguish it from the spherical bearing 46 of the forward connecting mechanism. The second spherical bearing 82 is mounted on one of the fairings 36, 32 and the sliding bearing 84 is arranged between the second spherical bearing 82 and the other one of the fairings 36, 32. In some embodiments, the sliding bearing 84 comprises a sliding pad 86 for sliding in a plane. In some embodiments, the sliding bearing 84 comprises a piston 88 slidable in a sliding bush 90. The piston 88 and/or the bush 90 are mounted to the associated fairing 36, 32 such that they can rotate about an axis that is essentially perpendicular to the sliding direction.

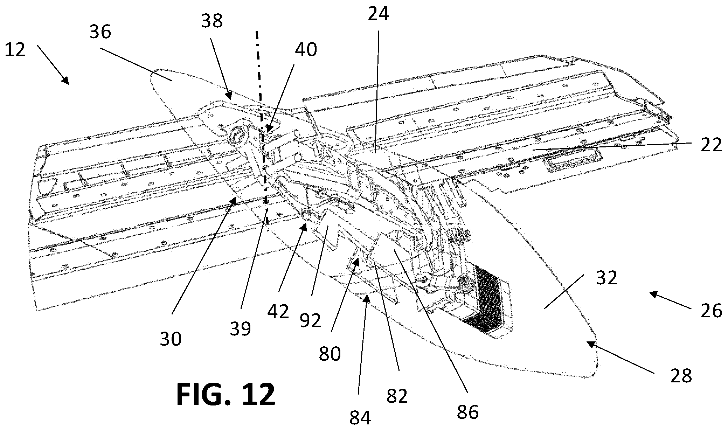

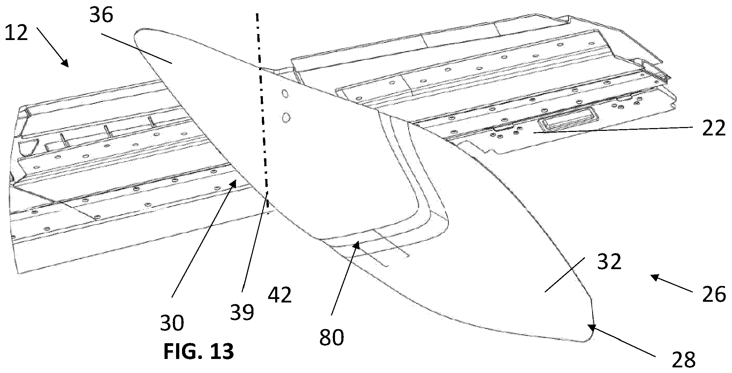

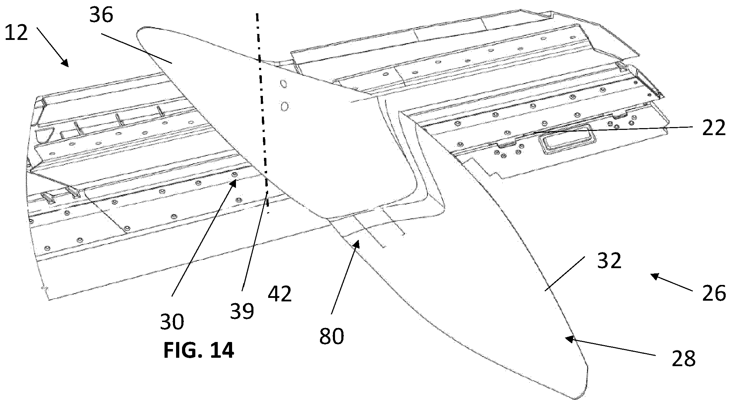

In the fifth embodiment as shown in Figs. 11 to 14, the second spherical bearing 82 with three degrees of freedom is fixed to the wing side fairing 36. As explained above with reference to the first spherical bearing, a spherical bearing typically has, as first and second bearing elements a ball portion and a bearing shell. One of these bearing elements is connected to the wing side fearing 36, and the other of these bearing elements is connected to the sliding bearing 84. Especially, the wing side fairing 36 has a cantilever arm 92 for holding the first bearing element of the second spherical bearing 80. Sliding pads 86 with two degrees of freedom are fixed inside the flap side fairing 32 and configured such that they can slide in a plane relative to the second bearing element of the spherical bearing 80. Figs. 11 and 14 show the extended state where the flap 22 is extended, while Figs. 12 and 13 show the retracted state.

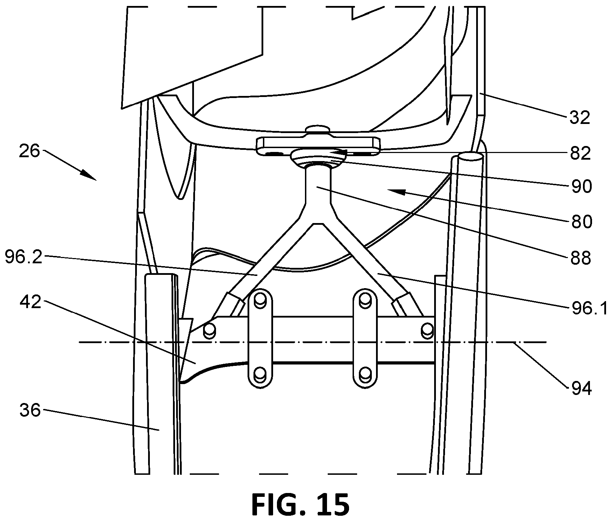

Another possible design of the fairing joint 80 is shown in the sixth embodiment as depicted in Figs. 15 to 17. Compared to the fifth embodiment, the location of the second spherical bearing 82 is inverted. Here one of the bearing elements of the spherical bearing 82 is fixed to the structure of the flap side fairing 32. In an embodiment not shown, the sliding pads 86 with two degrees of freedom are mounted on the wing side fairing 36. In the embodiment as shown in Figs. 15 to 17, the sliding bearing 84 has the sliding bush 90 connected to the other bearing element of the second spherical bearing 82 while the piston 88 is linked in a manner rotatable around a hinge line to the wing side fairing 36. In the embodiment shown, the ball element of the second spherical bearing 82 is configured as sliding bush 90 and provides a translational joint with one degree of freedom with the piston 88. The piston 88 has one end sliding in the bush 90 and is bifurcated at the other end, wherein a first and second branch 96.1, 96.2 are pivotally linked to a structure, such as the fairing bridge 67 or any other element of the rearward connecting mechanism, of the wing side fairing 36. This provides a rotating joint with one degree of freedom. Overall, the fairing joint 80 of the sixth embodiment also has five degrees of freedom such that lateral movements are transferred, but other relative movements of the fairings 32, 36 are essentially allowed.

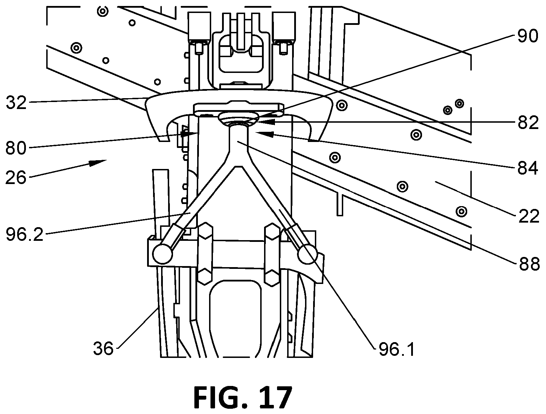

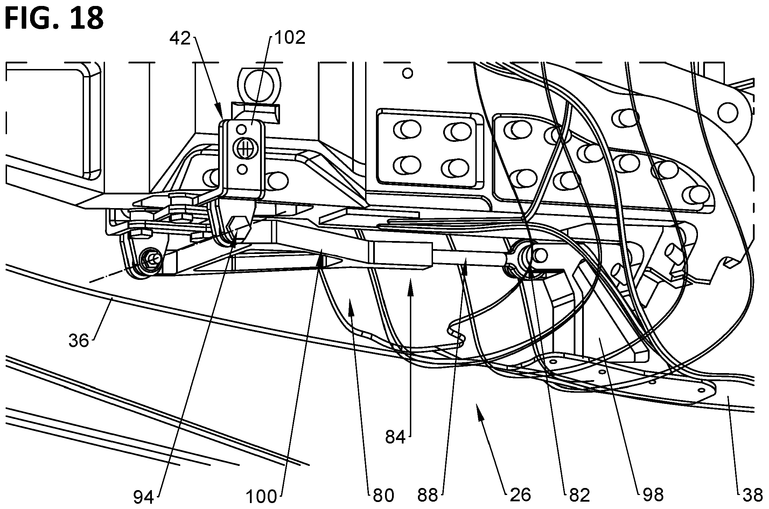

A similar approach is shown in the seventh embodiment of the fairing arrangement 26 as shown in Figs. 17 and 18. Here, the ball element of the second spherical bearing 82 is mounted on a bracket 98 fixed inside the flap side fairing 32. A first end of the piston 88 of the sliding bearing 84 is integrally formed with the bearing shell of the second spherical bearing 82. The second end portion of the piston 88 slides in the sliding bush 90 that is arranged on an A-Lever 100 (shaped in form of the letter "A"). The two branches of the A-lever are mounted in order to rotate about the hinge line 94 to a bracket 102 of the rearward connecting mechanism 42.

The different features of different embodiments can be combined as needed. For example, the rearward connecting mechanism 42 may comprise any combination of swing struts, tensile means, cables, linear bearings, track and roller or slider arrangements. Further, while not shown, the fairing joint 80 of any of the first to fourth embodiments may be designed as shown in any of the fifth to seventh embodiment.

A functionally improved fairing arrangement (26) for a high-lift mechanism (20) of an aircraft (10) has been described. The high-lift mechanism (20) includes a flap (22) to be arranged at a trailing edge (16) of an aircraft wing (12) and a mounting and guiding mechanism (24) for the flap (26). The fairing arrangement (26) comprises a flap side fairing unit (28) and a wing side fairing unit (30). The flap side fairing unit (28) comprises a flap side fairing (32) for covering an aft part of the mounting and guiding mechanism (24) and a flap side fairing mount (34) for rigidly mounting the flap side fairing (32) to the flap (22). The wing side fairing unit (30) comprises a wing side fairing (36) for covering a forward part of the mounting and guiding mechanism (24) and a wing side fairing mount (38) for mounting the wing side fairing (36) to the wing (12). The wing side fairing mount (38) is configured for movably connecting the wing side fairing (36) to the wing (12), preferably such that the wing side fairing (36) is rotatable around an axis (39) directed at least partially in a vertical direction. A fairing joint (80) couples the flap side fairing (32) and the wing side fairing (36) in order to transfer movements of the flap side fairing (32) to the wing side fairing (36). Hence, a lateral or rotational movement of the wing side fairing (36) is controlled by the flap side fairing (32).

### Reference sign list:

- 10: aircraft
- 12: wing
- 14: leading edge
- 16: trailing edge
- 18: high-lift system
- 20: high-lift mechanism
- 22: flap
- 24: mounting and guiding mechanism
- 26: fairing arrangement
- 28: flap side fairing unit
- 30: wing side fairing unit
- 32: flap side fairing
- 34: flap side fairing mount
- 36: wing side fairing
- 38: wing side fairing mount
- 39: vertical axis
- 40: forward connecting mechanism
- 42: rearward connecting mechanism
- 44: second axis
- 46: first spherical bearing
- 48: ball portion

- 50: bearing shell
- 52: track member
- 54: shaft portion
- 56: forward end portion
- 58: rearward end portion
- 60.1: first swing strut
- 60.2: second swing strut
- 61: spherical bearing at end of strut
- 62.1: upper track and roller arrangement
- 62.2: lower track and roller arrangement
- 64.1: upper roller
- 64.2: lower roller
- 65: wing structure
- 66: roller support
- 67: fairing bridge
- 68: linear bearing
- 70: curved track
- 72: roller
- 74: fixed front fairing unit
- 76: forward fairing
- 78: intermediate fairing
- 80: fairing joint
- 82: second spherical bearing
- 84: sliding bearing
- 86: sliding pad
- 88: piston
- 90: sliding bush
- 92: cantilever arm
- 94: hinge line
- 96.1: first branch
- 96.2: second branch
- 98: bracket
- 100: A-lever
- 102: bracket

## Claims

1. Fairing arrangement (26) for a high-lift mechanism (20) of an aircraft (10), wherein the high-lift mechanism (20) includes a flap (22) to be arranged at a trailing edge (16) of an aircraft wing (12) and a mounting and guiding mechanism (24) for the flap (26),
the fairing arrangement (26) comprising a flap side fairing unit (28) and a wing side fairing unit (30),
the flap side fairing unit (28) comprising a flap side fairing (32) for covering an aft part of the mounting and guiding mechanism (24) and a flap side fairing mount (34) for rigidly mounting the flap side fairing (32) to the flap (22),
the wing side fairing unit (30) comprising a wing side fairing (36) for covering a forward part of the mounting and guiding mechanism (24) and a wing side fairing mount (38) for movably mounting the wing side fairing (36) to the wing (12),
wherein the wing side fairing mount (38) is configured for connecting the wing side fairing (36) movably to the wing (12),
wherein the wing side fairing (36) and the flap side fairing (32) are connected by a fairing joint (80) allowing relative movements of the fairings (36, 32) during movement of the flap (22) such that the movement of the wing side fairing (36) is controlled by the movement of the flap side fairing (32), **characterized in that**
the fairing joint (80) and the wing side fairing mount (38) are configured in a way that a lateral movement of the flap side fairing (32) guides the lateral or rotational position of the wing side fairing (36).

2. Fairing arrangement (26) according to claim 1, **characterized in that** the fairing joint (80) is configured such that it allows relative movements of the fairings (36, 32)
2.1 in line of flight and/or
2.2 in a vertical direction and/or
2.3 around a vertical axis and/or
2.4 around a first horizontal axis essentially directed in spanwise direction and/or
2.5 a second horizontal axis essentially directed in line of flight,
but preferably effects a common sideward movement of a rearward end portion (58) of the wing side fairing (36) and of a forward end portion (56) of the flap side fairing (32).

3. Fairing arrangement (26) according to any of the preceding claims, **characterized in that** the fairing joint (80) has five degrees of freedom.

4. Fairing arrangement (26) according to any of the preceding claims, **characterized in that** the fairing joint (80) comprises a spherical bearing (82) and a sliding bearing (84).

5. Fairing arrangement (26) according to claim 4, **characterized in that** the spherical bearing (82) is mounted on one of the fairings (36, 32) and the sliding bearing (84) is arranged between the spherical bearing (82) and the other one of the fairings (32, 36) and **in that** the sliding bearing (84) comprises
5.1 a sliding pad (86) for sliding in a plane or
5.2 a piston (88) slidable in a sliding bush (90) wherein the piston and/or the bush is rotatably mounted to the associated fairing (36, 32).

6. Fairing arrangement (26) according to any of the preceding claims, **characterized in that** the wing side fairing mount (38) is configured for connecting the wing side fairing (36) movably to the wing (12) such that the wing side fairing (36) is rotatable around an axis (39) directed at least partially in a vertical direction, and **in that** the fairing joint connects the fairings (36, 32) such that the rotational movement of the wing side fairing (36) around the axis (39) is controlled by the movement of the flap side fairing (32).

7. Fairing arrangement (26) according to any of the preceding claims, **characterized in that** the wing side fairing mount (38) comprises a forward connecting mechanism (40) configured to connect a forward part of the wing side fairing (36) rotatably with at least one or with two degrees of freedom to the mounting and guiding mechanism (24).

8. Fairing arrangement (26) according to claim 7, **characterized in that** the forward connecting mechanism (40) includes a multi-axis bearing or a spherical bearing (46).

9. Fairing arrangement (26) according to any of the preceding claims, **characterized in that** the wing side fairing mount (38) comprises a rearward connecting mechanism (42) configured to connect a rearward part of the wing side fairing (32) such that it is movable in a lateral or spanwise direction and especially such that this movement is effected, driven or controlled via the fairing joint (80).

10. Fairing arrangement (26) according to claim 9, **characterized in that** the rearward connecting mechanism (42) includes at least one or several of the group consisting of a swing strut (60.1, 60.2), a pair of parallel swing struts (60.1, 60.2), a tensile means, a cable, an arrangement (62.1, 62.2) of a track and rollers (64.1, 64.2) or sliders, an upper track and roller or slider arrangement (62.1), a lower track and roller or slider arrangement (62.2), a track (70) curved around the rotation axis (39) of the forward connecting mechanism (40) in combination with a set of rollers (72) or sliders running on the curved track (70), and a linear bearing (68).

11. Fairing arrangement (26) according to any of the preceding claims, **characterized in that** a forward end portion (56) of the flap side fairing (32) extends into a rearward end portion (58) of the wing side fairing (36) in a telescopically manner.

12. Fairing arrangement (26) according to any of the preceding claims, **characterized by** a fixed front fairing unit (74) configured to be rigidly fixed to the wing (12), wherein the wing side fairing unit (30) is configured as intermediate movable wing side fairing unit arranged between fixed front fairing unit (74) and the flap side fairing unit (28).

13. High-lift system (18) for an aircraft (10), comprising
a high-lift mechanism (20) including a flap (22) to be arranged at a trailing edge (16) of an aircraft wing (12) and a mounting and guiding mechanism (24) for the flap (22), and
a fairing arrangement (26) according to any of the preceding claims, wherein the flap side fairing is rigidly connected to the flap (22).

14. Aircraft wing (12) comprising a high-lift system (18) according to claim 13 and/or a fairing arrangement (26) according to any of the claims 1 to 12.

15. Aircraft (10), comprising a wing (12) according to claim 14, a high-lift system (18) according to claim 13 and/or a fairing arrangement (26) according to any of the claims 1 to 12.

## Patentansprüche

1. Verkleidungsanordnung (26) für einen Hochauftriebsmechanismus (20) eines Flugzeugs (10), wobei der Hochauftriebsmechanismus (20) eine an einer Hinterkante (16) eines Flugzeugflügels (12) anzuordnende Klappe (22) und einen Montage- und Führungsmechanismus (24) für die Klappe (26) aufweist,
wobei die Verkleidungsanordnung (26) eine klappenseitige Verkleidungseinheit (28) und eine flügelseitige Verkleidungseinheit (30) umfasst,
wobei die klappenseitige Verkleidungseinheit (28) eine klappenseitige Verkleidung (32) zum Abdecken eines hinteren Teils des Montage- und Führungsmechanismus (24) und eine klappenseitige Verkleidungshalterung (34) zum starren Montieren der klappenseitigen Verkleidung (32) an der Klappe (22) umfasst, wobei die flügelseitige Verkleidungseinheit (30) eine flügelseitige Verkleidung (36) zum Abdecken eines vorderen Teils des Montage- und Führungsmechanismus (24) und eine flügelseitige Verkleidungshalterung (38) zum beweglichen Montieren der flügelseitigen Verkleidung (36) an dem Flügel (12) umfasst, wobei die flügelseitige Verkleidungshalterung (38) dazu konfiguriert ist, die flügelseitige Verkleidung (36) beweglich mit dem Flügel (12) zu verbinden,
wobei die flügelseitige Verkleidung (36) und die klappenseitige Verkleidung (32) durch ein Verkleidungsgelenk (80) verbunden sind, das Relativbewegungen der Verkleidungen (36, 32) während der Bewegung der Klappe (22) erlaubt, so dass die Bewegung der flügelseitigen Verkleidung (36) durch die Bewegung der klappenseitigen Verkleidung (32) gesteuert wird,
**dadurch gekennzeichnet, dass** das Verkleidungsgelenk (80) und die flügelseitige Verkleidungshalterung (38) derart konfiguriert sind, dass eine seitliche Bewegung der klappenseitigen Verkleidung (32) die seitliche oder rotative Position der flügelseitigen Verkleidung (36) führt.

2. Verkleidungsanordnung (26) nach Anspruch 1, **dadurch gekennzeichnet, dass** das Verkleidungsgelenk (80) derart konfiguriert ist, dass es Relativbewegungen der Verkleidungen (36, 32) erlaubt
2.1 in Flugrichtung und/oder
2.2 in einer vertikalen Richtung und/oder
2.3 um eine vertikale Achse und/oder
2.4 um eine erste horizontale Achse, die im Wesentlichen in Spannweitenrichtung gerichtet ist, und/oder
2.5 eine zweite horizontale Achse, die im Wesentlichen in Flugrichtung gerichtet ist, aber vorzugsweise eine gemeinsame seitliche Bewegung eines hinteren Endabschnitts (58) der flügelseitigen Verkleidung (36) und eines vorderen Endabschnitts (56) der klappenseitigen Verkleidung (32) bewirkt.

3. Verkleidungsanordnung (26) nach einem der vorhergehenden Ansprüche, **dadurch gekennzeichnet, dass** das Verkleidungsgelenk (80) fünf Freiheitsgrade aufweist.

4. Verkleidungsanordnung (26) nach einem der vorhergehenden Ansprüche, **dadurch gekennzeichnet, dass** das Verkleidungsgelenk (80) ein sphärisches Lager (82) und ein Gleitlager (84) umfasst.

5. Verkleidungsanordnung (26) nach Anspruch 4, **dadurch gekennzeichnet, dass** das sphärische Lager (82) an einer der Verkleidungen (36, 32) montiert ist und das Gleitlager (84) zwischen dem sphärischen Lager (82) und der anderen der Verkleidungen (32, 36) angeordnet ist und dass das Gleitlager (84) umfasst: 5.1 ein Gleitpad (86) zum Gleiten in einer Ebene oder 5.2 einen Kolben (88), der in einer Gleitbuchse (90) verschiebbar ist, wobei der Kolben und/oder die Buchse drehbar an der zugehörigen Verkleidung (36, 32) montiert ist.

6. Verkleidungsanordnung (26) nach einem der vorhergehenden Ansprüche, **dadurch gekennzeichnet, dass** die flügelseitige Verkleidungshalterung (38) dazu konfiguriert ist, die flügelseitige Verkleidung (36) beweglich mit dem Flügel (12) zu verbinden, so dass die flügelseitige Verkleidung (36) um eine Achse (39) drehbar ist, die zumindest teilweise in einer vertikalen Richtung gerichtet ist, und dass das Verkleidungsgelenk die Verkleidungen (36, 32) derart verbindet, dass die Drehbewegung der flügelseitigen Verkleidung (36) um die Achse (39) durch die Bewegung der klappenseitigen Verkleidung (32) gesteuert wird.

7. Verkleidungsanordnung (26) nach einem der vorhergehenden Ansprüche, **dadurch gekennzeichnet, dass** die flügelseitige Verkleidungshalterung (38) einen vorderen Verbindungsmechanismus (40) umfasst, der dazu konfiguriert ist, einen vorderen Teil der flügelseitigen Verkleidung (36) drehbar mit mindestens einem oder mit zwei Freiheitsgraden mit dem Montage- und Führungsmechanismus (24) zu verbinden.

8. Verkleidungsanordnung (26) nach Anspruch 7, **dadurch gekennzeichnet, dass** der vordere Verbindungsmechanismus (40) ein Mehrachsenlager oder ein sphärisches Lager (46) beinhaltet.

9. Verkleidungsanordnung (26) nach einem der vorhergehenden Ansprüche, **dadurch gekennzeichnet, dass** die flügelseitige Verkleidungshalterung (38) einen hinteren Verbindungsmechanismus (42) umfasst, der dazu konfiguriert ist, einen hinteren Teil der flügelseitigen Verkleidung (32) derart zu verbinden, dass er in einer lateralen Richtung oder Spannweitenrichtung beweglich ist und insbesondere derart, dass diese Bewegung über das Verkleidungsgelenk (80) bewirkt, angetrieben oder gesteuert wird.

10. Verkleidungsanordnung (26) nach Anspruch 9, **dadurch gekennzeichnet, dass** der hintere Verbindungsmechanismus (42) mindestens eines oder mehrere aus der Gruppe beinhaltet, bestehend aus einer Schwingstrebe (60.1, 60.2), einem Paar paralleler Schwingstreben (60.1, 60.2), einem Zugmittel, einem Kabel, einer Anordnung (62.1, 62.2) aus einer Schiene und Rollen (64.1, 64.2) oder Gleitern, einer oberen Schienen- und Rollen- oder Gleiteranordnung (62.1), einer unteren Schienen- und Rollen- oder Gleiteranordnung (62.2), einer um die Drehachse (39) des vorderen Verbindungsmechanismus (40) gekrümmten Schiene (70) in Kombination mit einem Satz von Rollen (72) oder Gleitern, die auf der gekrümmten Schiene (70) laufen, und einem Linearlager (68).

11. Verkleidungsanordnung (26) nach einem der vorhergehenden Ansprüche, **dadurch gekennzeichnet, dass** sich ein vorderer Endabschnitt (56) der klappenseitigen Verkleidung (32) teleskopartig in einen hinteren Endabschnitt (58) der flügelseitigen Verkleidung (36) erstreckt.

12. Verkleidungsanordnung (26) nach einem der vorhergehenden Ansprüche, **gekennzeichnet durch** eine feste vordere Verkleidungseinheit (74), die dazu konfiguriert ist, starr an dem Flügel (12) befestigt zu werden, wobei die flügelseitige Verkleidungseinheit (30) als eine zwischen der festen vorderen Verkleidungseinheit (74) und der klappenseitigen Verkleidungseinheit (28) angeordnete, bewegliche flügelseitige Zwischenverkleidungseinheit konfiguriert ist.

13. Hochauftriebssystem (18) für ein Flugzeug (10), umfassend einen Hochauftriebsmechanismus (20), der eine an einer Hinterkante (16) eines Flugzeugflügels (12) anzuordnende Klappe (22) und einen Montage- und Führungsmechanismus (24) für die Klappe (22) beinhaltet, und eine Verkleidungsanordnung (26) nach einem der vorhergehenden Ansprüche, wobei die klappenseitige Verkleidung starr mit der Klappe (22) verbunden ist.

14. Flugzeugflügel (12), umfassend ein Hochauftriebssystem (18) nach Anspruch 13 und/oder eine Verkleidungsanordnung (26) nach einem der Ansprüche 1 bis 12.

15. Flugzeug (10), umfassend einen Flügel (12) nach Anspruch 14, ein Hochauftriebssystem (18) nach Anspruch 13 und/oder eine Verkleidungsanordnung (26) nach einem der Ansprüche 1 bis 12.

## Revendications

1. Agencement de carénage (26) pour un mécanisme hypersustentateur (20) d'un aéronef (10), dans lequel le mécanisme hypersustentateur (20) comprend un volet (22) destiné à être disposé au niveau d'un bord de fuite (16) d'une aile d'aéronef (12) et un mécanisme de montage et de guidage (24) pour le volet (26),
l'agencement de carénage (26) comprenant une unité de carénage côté volet (28) et une unité de carénage côté aile (30),
l'unité de carénage côté volet (28) comprenant un carénage côté volet (32) pour couvrir une partie arrière du mécanisme de montage et de guidage (24) et un support de carénage côté volet (34) pour monter de manière rigide le carénage côté volet (32) sur le volet (22),
l'unité de carénage côté aile (30) comprenant un carénage côté aile (36) pour couvrir une partie avant du mécanisme de montage et de guidage (24) et un support de carénage côté aile (38) pour monter de manière mobile le carénage côté aile (36) sur l'aile (12),
dans lequel le support de carénage côté aile (38) est configuré pour relier le carénage côté aile (36) de manière mobile à l'aile (12),
dans lequel le carénage côté aile (36) et le carénage côté volet (32) sont reliés par un joint de carénage (80) permettant des mouvements relatifs des carénages (36, 32) pendant le mouvement du volet (22) de telle sorte que le mouvement du carénage côté aile (36) est commandé par le mouvement du carénage côté volet (32),
**caractérisé en ce que** le joint de carénage (80) et le support de carénage côté aile (38) sont configurés de telle sorte qu'un mouvement latéral du carénage côté volet (32) guide la position latérale ou rotative du carénage côté aile (36).

2. Agencement de carénage (26) selon la revendication 1, **caractérisé en ce que** le joint de carénage (80) est configuré de telle sorte qu'il permet des mouvements relatifs des carénages (36, 32)
2.1 dans l'axe de vol et/ou
2.2 dans une direction verticale et/ou
2.3 autour d'un axe vertical et/ou
2.4 autour d'un premier axe horizontal essentiellement dirigé dans le sens de l'envergure et/ou
2.5 un second axe horizontal essentiellement dirigé dans l'axe de vol, mais effectue de préférence un mouvement latéral commun d'une partie d'extrémité arrière (58) du carénage côté aile (36) et d'une partie d'extrémité avant (56) du carénage côté volet (32).

3. Agencement de carénage (26) selon l'une quelconque des revendications précédentes, **caractérisé en ce que** le joint de carénage (80) possède cinq degrés de liberté.

4. Agencement de carénage (26) selon l'une quelconque des revendications précédentes, **caractérisé en ce que** le joint de carénage (80) comprend un palier sphérique (82) et un palier lisse (84).

5. Agencement de carénage (26) selon la revendication 4, **caractérisé en ce que** le palier sphérique (82) est monté sur l'un des carénages (36, 32) et le palier lisse (84) est disposé entre le palier sphérique (82) et l'autre des carénages (32, 36) et **en ce que** le palier lisse (84) comprend 5.1 un patin de glissement (86) pour coulisser dans un plan ou 5.2 un piston (88) pouvant coulisser dans une douille de glissement (90), le piston et/ou la douille étant montés de manière rotative sur le carénage associé (36, 32).

6. Agencement de carénage (26) selon l'une quelconque des revendications précédentes, **caractérisé en ce que** le support de carénage côté aile (38) est configuré pour relier le carénage côté aile (36) de manière mobile à l'aile (12) de telle sorte que le carénage côté aile (36) est rotatif autour d'un axe (39) dirigé au moins partiellement dans une direction verticale, et **en ce que** le joint de carénage relie les carénages (36, 32) de telle sorte que le mouvement rotatif du carénage côté aile (36) autour de l'axe (39) est commandé par le mouvement du carénage côté volet (32).

7. Agencement de carénage (26) selon l'une quelconque des revendications précédentes, **caractérisé en ce que** le support de carénage côté aile (38) comprend un mécanisme de liaison avant (40) configuré pour relier une partie avant du carénage côté aile (36) de manière rotative avec au moins un ou avec deux degrés de liberté au mécanisme de montage et de guidage (24).

8. Agencement de carénage (26) selon la revendication 7, **caractérisé en ce que** le mécanisme de liaison avant (40) comprend un palier multiaxial ou un palier sphérique (46).

9. Agencement de carénage (26) selon l'une quelconque des revendications précédentes, **caractérisé en ce que** le support de carénage côté aile (38) comprend un mécanisme de liaison arrière (42) configuré pour relier une partie arrière du carénage côté aile (32) de telle sorte qu'elle est mobile dans une direction latérale ou dans le sens de l'envergure et en particulier de telle sorte que ce mouvement est effectué, entraîné ou commandé via le joint de carénage (80).

10. Agencement de carénage (26) selon la revendication 9, **caractérisé en ce que** le mécanisme de liaison arrière (42) comprend au moins un ou plusieurs éléments du groupe constitué par une bielle oscillante (60.1, 60.2), une paire de bielles oscillantes parallèles (60.1, 60.2), un moyen de traction, un câble, un agencement (62.1, 62.2) d'un rail et de rouleaux (64.1, 64.2) ou de coulisseaux, un agencement supérieur de rail et de rouleaux ou de coulisseaux (62.1), un agencement inférieur de rail et de rouleaux ou de coulisseaux (62.2), un rail (70) courbé autour de l'axe de rotation (39) du mécanisme de liaison avant (40) en combinaison avec un ensemble de rouleaux (72) ou de coulisseaux circulant sur le rail courbé (70), et un palier linéaire (68).

11. Agencement de carénage (26) selon l'une quelconque des revendications précédentes, **caractérisé en ce qu'**une partie d'extrémité avant (56) du carénage côté volet (32) s'étend dans une partie d'extrémité arrière (58) du carénage côté aile (36) de manière télescopique.

12. Agencement de carénage (26) selon l'une quelconque des revendications précédentes, **caractérisé par** une unité de carénage avant fixe (74) configurée pour être fixée de manière rigide à l'aile (12), dans lequel l'unité de carénage côté aile (30) est configurée comme une unité de carénage côté aile mobile intermédiaire disposée entre l'unité de carénage avant fixe (74) et l'unité de carénage côté volet (28).

13. Système hypersustentateur (18) pour un aéronef (10), comprenant un mécanisme hypersustentateur (20) incluant un volet (22) destiné à être disposé au niveau d'un bord de fuite (16) d'une aile d'aéronef (12) et un mécanisme de montage et de guidage (24) pour le volet (22), et un agencement de carénage (26) selon l'une quelconque des revendications précédentes, dans lequel le carénage côté volet est relié de manière rigide au volet (22).

14. Aile d'aéronef (12) comprenant un système hypersustentateur (18) selon la revendication 13 et/ou un agencement de carénage (26) selon l'une quelconque des revendications 1 à 12.

15. Aéronef (10), comprenant une aile (12) selon la revendication 14, un système hypersustentateur (18) selon la revendication 13 et/ou un agencement de carénage (26) selon l'une quelconque des revendications 1 à 12.
